**Europäisches Patentamt**

**European Patent Office**

**Office européen des brevets**

(19)

(11) Veröffentlichungsnummer: **0 013 676**
**B1**

(12) **EUROPÄISCHE PATENTSCHRIFT**

(45) Veröffentlichungstag der Patentschrift: **10.03.82**

(51) Int. Cl.³: **G 03 B 17/20**

(21) Anmeldenummer: **79100261.1**

(22) Anmeldetag: **30.01.79**

(54) **Belichtungsanzeige im Sucher einer fotografischen Kamera.**

(43) Veröffentlichungstag der Anmeldung:
**06.08.80 Patentblatt 80/16**

(45) Bekanntmachung des Hinweises auf die Patenterteilung:
**10.03.82 Patentblatt 82/10**

(84) Benannte Vertragsstaaten:
**BE CH DE FR GB IT NL SE**

(56) Entgegenhaltungen:
**DE - A - 2 618 464**
**DE - A - 2 625 552**
**DE - A - 2 658 699**
**DE - A - 2 734 170**
**US - A - 3 981 023**
**US - A - 4 074 292**

(73) Patentinhaber: **Rollei-Werke Franke & Heidecke GmbH + Co KG**
**Salzdahlumer Strasse 196**
**D-3300 Braunschweig (DE)**

(72) Erfinder: **Rodeck, Hans Jürgen**
**Über dem Steinbruch 2**
**D-3301 Erkerode (DE)**

(74) Vertreter: **Gramm, Werner, Dipl.-Ing. et al,**
**Patentanwälte Gramm + Lins Theodor-Heuss-Strasse 2**
**D-3300 Braunschweig (DE)**

Courier Press, Leamington Spa, England.

Belichtungsanzeige im Sucher einer fotografischen Kamera

Die Erfindung betrifft eine Belichtungsanzeige in einer fotografischen Kamera, bei der die Anzeige der Belichtungswerte über den gesamten Bereich als LED-Zeile mit unterschiedlicher Zeilenstruktur im Sucher erfolgt.

Eine derartige Ausführungsform läßt sich z.B. der DE-A 26 18 464 entnehmen. Diese Druckschrift offenbart eine Anzeigevorrichtung für die Verschlußgeschwindigkeit in einer Kamera mit einer Anordnung von lichtemittierenden Elementen zur Bestrahlung mehrerer Zahlen für die Anzeige der Verschlußgeschwindigkeit, wobei die bestrahlte Zahl durch den Sucher der Kamera sichtbar ist. Da die Verschlußzeiten in üblicher Weise als Kehrwerte angegeben sind, tauchen z.B. die Zahlen 2, 4 und 8 zweimal als bestrahlte Zahl auf, nämlich einmal für die Verschlußzeiten 1/2, 1/4 und 1/8 sec und einmal für die Verschlußzeiten 2, 4 bzw. 8 sec.. Um hier eine Verwechslung weitgehend auszuschließen, sind die die vollen Sekunden angebenden Zahlen gegenüber den anderen bestrahlten Zahlen etwas größer ausgebildet.

Insbesondere in SLR-Kameras werden lichtaussendende Halbleiter-Dioden verwendet, die im Sucher einer Kamera lediglich als winzige Leuchtpunkte erscheinen. Dabei sind die einzelnen LED's dicht aneinander gereiht, wobei jeder einzelnen LED je nach Kameraart ein Blendenstufen- oder Belichtungszeitwert zugeordnet ist. Erfolgt die Belichtung selbsttätig entweder als Blendenoder Zeitautomat, dienen LED-Zeilen lediglich noch der Kontrolle des von der Automatik verwendeten Blenden- bzw. Belichtungszeitwertes und dem Erkennen absoluter Grenzwerte zur Vermeidung von Über- oder Unterbelichtungen.

Verläßt man sich auf die automatische Belichtungssteuerung, werden die LED-Signale meist nur noch flüchtig und unkonzentriert beachtet. Es kann daher geschehen, daß man von der einen zur anderen Aufnahme mit unterschiedlicher Objekthelligkeit den Wechsel der Belichtungszeit z.B. von 1/60 sec als Kurzzeitaufnahme zur 1/8 sec als deutlicher Langzeitaufnahme nicht beachtet, da der Abstand der einzelnen LED's innerhalb der Zeile nur wenige Millimeter beträgt. Das betrachtende Auge wird bei flüchtigem Hinsehen den geringen räumlichen Abstand zwischen der LED für 1/60 sec und der für 1/8 sec nicht ohne weiteres bemerken. So wird zwar die Aufnahme mit 1/8 sec korrekt belichtet, kann jedoch aus der Hand aufgenommen verwackelt sein.

Der Erfindung liegt somit die Aufgabe zugrunde, die eingangs erläuterte Belichtungsanzeige auf eine solche Ausführungsform zu übertragen, bei der die Leuchtdioden neben den die Belichtungszeiten symbolisierenden Zahlen angeordnet sind, wobei selbst bei einem nur flüchtig kontrollierenden Blick sofort auffällt, daß ein Wechsel aus dem Grenzbereich kurzer Belichtungszeitwerte in denjenigen mit längeren Belichtungszeitwerten erfolgt ist.

Diese Aufgabe wird gemäß der Erfindung durch folgende Merkmale gelöst:

a) Die Leuchtdioden sind im Blickfeld des Kamerabenutzers neben den die Belichtungszeiten symbolisierenden Zahlen angeordnet;

b) über den Leuchtdioden ist eine plane durchsichtige Abdeckung angeordnet, die auf einem Teil ihrer Oberfläche eine Ausformung aufweist so, daß die unter der Ausformung angeordneten Leuchtdioden auf der Abdeckung Bereiche unterschiedlicher Struktur ausleuchten im Vergleich zu den unter dem planen Teil der Abdeckung liegenden, Leuchtdioden;

c) die Ausformung befindet sich über denjenigen Leuchtdioden, die bei der Einsteuerung einer Belichtungszeit aufleuchten, deren Länge keine einwandfreie Aufnahme aus freier hand mehr zuläßt.

Durch diese Ausbildung kann das Auge des Betrachters die Bereiche unterschiedlicher Struktur unmittelbar und deutlich wahrnehmen. Fehler beim Ablesen der Information können daher nur noch selten auftreten. Die zur Erzielung der Struktur-unterschiede eingesetzten optischen Mittel lassen sich einstückig aus der an sich planen durchsichtigen Abdeckung oberhalb der LED-Punkte herausformen. Gegenüber den bisherigen Anzeigeeinrichtungen vergleichbarer Art sind durch die verbesserte Ausführungsform somit praktisch keine Mehrkosten verbunden.

Bevorzugte Ausführungsformen der Erfindung sind Gegenstand der Unteransprüche.

Drei Ausführungsbeispiele der Erfindung sind in der Zeichnung dargestellt und werden im folgenden näher beschrieben.

Es zeigen:

Fig. 1a-c jeweils in der Draufsicht und im Schnitt eine LED-Skala, wie sie ähnlich in Suchern von SLR-Kameras üblich sind.

Fig. 2 eine perspektivische Ansicht eines Plexiglasblocks in den ein Trägergitter mit LED's eingearbeitet ist und der an seiner Oberfläche mit einer Skala versehen ist.

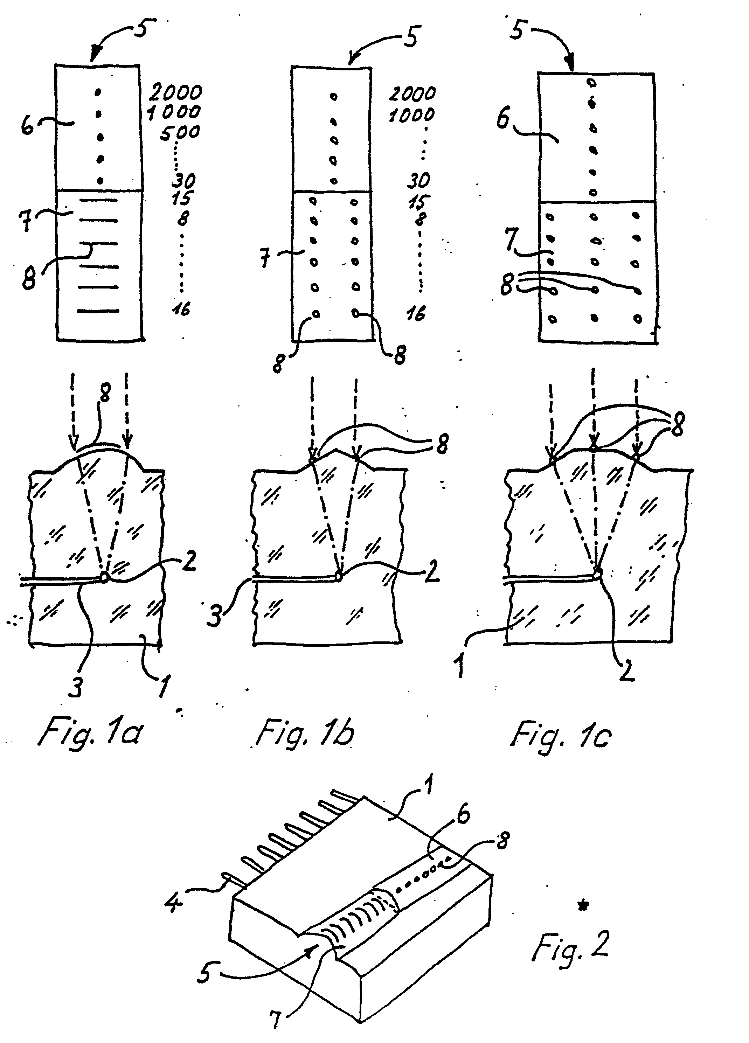

In Fig. 2 ist in perspektivischer Ansicht ein Plexiglasblock 1 mit einer LED-Skala dargestellt. In den Plexiglasblock ist ein Trägergitter 4 mit LED's eingearbeitet. Zur Verbesserung der Anschaulichkeit sind die einzelnen LED's und ihre Zuleitungen im Plexiglasblock 1 nicht dargestellt, sondern lediglich ihre an der Ableseskala 5 sichtbar werdende Abbildung 8. Die Ableseskala 5, die sich im Kamerasucher befindet, unterteilt sich in einen planen Ableseteil 6 mit den Leuchtpunkten der LED's für die Kurzzeiten der Belichtung und in einen dachförmig gewölbten Ableseteil 7 mit den Leuchtpunkten für die Langzeiten der Belichtung. Dieser dachförmig gewölbte Ableseteil 7 der Ableseskala 5 besteht aus einer Zylinderlinse über den in der Tiefe des Plexiglasblocks angeordneten LED-Punkten. Durch die Form der Zylinderlinse werden diese LED-Punkte an der Oberfläche der Ableseskala streifenförmig abgebildet.

Beim planen Ableseteil der Skala werden die LED-Punkte dagegen punktförmig abgebildet.

In den Fig. 1a, b und c sind verschiedene Ausführungsformen des dachförmig gewölbten Ableseteils 7 der Ableseskala 5 im Schnitt und in der Draufsicht dargestellt.

Fig. 1a zeigt die schon in Fig. 2 beschriebene Ausführungsform des dachförmig gewölbten Ableseteils in Form einer Zylinderlinse. Im Plexiglasblock 1 befindet sich das LED 2 mit seiner Anschlußleitung 3. Durch die zylinderförmige Wölbung der Oberfläche der Ableseskala 5 wird der von dem LED ausgestrahlte Leuchtpunkt als streifenförmige Abbildung 8 an der Oberfläche gebrochen. In der Draufsicht erkennt man, daß diese streifenförmigen Abbildungen 8 der LED's 2 nur bei den Langzeiten der Belichtung bis 1/15 vorhanden sind. Die Hand-belichtungszeiten von 1/30 bis zu 1/2000 werden dagegen durch die plane Oberfläche des planen Ableseteils 6 der Skala 5 nicht streifenförmig sondern punktförmig abgebildet. Durch diese optische Hervorhebung der Langzeiten auf der LED-Skala eines Kamerasuchers kann das Auge des Betrachters eines zu fotografierenden Objekts quasi nebenbei ohne weiteres warnehmen, daß sich die Belichtungsverhältnisse für das aufzunehmende Objekt so verändert haben, daß eine Fotografie von Hand unmöglich geworden ist.

In Fig. 1b ist eine abgeänderte Form der Ableseskala 5 dargestellt. Bis auf den dachförmig gewölbten Ableseteil 7 entsprechen alle Einzelheiten den schon in Fig. 1a beschriebe-nen. In dieser Ausführungsform besteht der dachförmige Ableseteil 7 aus einer Dachkante über den LED-Punkten 2. An den Seitenflächen der Dachkante werden die LED's 2 in einer punktförmigen Abbildung 8 sichtbar. Für die Langbelichtungszeiten stehen somit jeweils zwei Abbildungen 8 zur deutlichen Unterscheidung von den Kurzbelichtungszeiten zur Verfügung.

In Fig. 1c tritt anstelle der in Fig. 1a be-schriebenen Zylinderlinse und der in Fig. 1b be-schriebenen Dachkante ein Dachstumpf. Dieser Dachstumpf bildet die LED's 2 in drei Rihen auf der Ableseskala 5 ab, so daß sich auch hier für den Betrachter gegenüber dem planen Ableseteil mit nur einer Reihe von Leuchtpunkten eine eindeutige Unterscheidung zwischen den Lang-belichtungszeiten und den Handbelichtungs-zeiten ergibt.

Die Wirkungsweise der vorbeschriebenen LED-Anzeige ist folgende: zur Erreichung einer gewissen Tiefenschärfe will der Fotografierende z. B. mit einer bestimmten Blende ein Objekt in einer gewissen Entfernung fotografieren. Bei modernen SLR-Kameras stellt sich daraufhin die Zeit entsprechend der Objekt-helligkeit und der eingestellten Filmempfind-lichkeit automatisch ein. Die für eine bestimmte Blende von der Kamera automatisch eingestellte Zeit wird über LED's im Kamerasucher abgebildet. Da sich aber das Auge des Betrachters im wesentlichen auf das zu fotografierende Objekt konzentriert, kann es in der Praxis leicht geschehen, daß über ein LED eine Belichtungszeit angezeigt wird, die für eine Handbelichtungszeit nicht mehr ausriecht. Um diesem Übersehen einer nicht ausreichenden Belichtungszeit vorzubeugen, leuchten in den erfindungsgemäßen Ausführungsformen anstelle von nur einem Lichtpunkt zwei, drei oder mehr Lichtpunkte auf, wenn die sich automatisch einstellende Belichtungszeit weniger als 1/30 beträgt. Durch diesen Sprung in der Ableseskala für die Belichtungszeiten wird das Auge des Betrachters auch bei oberflächlicher Betrachtung der am Rande des Sucherbildes befindlichen Ableseskala optisch aufmerksam gemacht und so in vorteilhafter Weise vor Fehlbelichtungen gewarnt.

**Patentansprüche**

1. Belichtungsanzeige in einer fotografischen Kamera, bei der die Anzeige der Belichtungswerte über den gesamten Bereich als LED-Zeile mit unterschiedlicher Zeilenstruktur im Sucher erfolgt, gekennzeichnet durch folgende Merkmale:
a) Die Leuchtdioden (2) sind im Blickfeld des Kamerabenutzers neben den die Belichtungszeiten symbolisierenden Zahlen angeordnet;
b) über den Leuchtdioden (2) ist eine plane durchsichtige Abdeckung (5) angeordnet, die auf einem Teil ihrer Oberfläche eine Ausformung (7) aufweist so, daß die unter der Ausformung angeordneten Leuchtdioden auf der Abdeckung Bereiche unterschiedlicher Struktur ausleuchten im Vergleich zu den unter dem planen Teil (6) der Abdeckung liegenden Leuchtdioden;
c) die Ausformung (7) befindet sich über denjenigen Leuchtdioden (2), die bei der Ein-steuerung einer Belichtungszeit auf-leuchten, deren Länge keine einwandfreie Aufnahme aus freier Hand mehr zuläßt.

2. Belichtungsanzeige nach Anspruch 1, dadurch gekennzeichnet, daß die Ausformung (7) aus der LED-Zeilenabdeckung linsenförmig ausgebildet ist.

3. Belichtungsanzeige nach Anspruch 1, dadurch gekennzeichnet, daß die Ausformung (7) aus der LED-Zeilenabdeckung als prismatisches Dachkant ausgebildet ist.

4. Belichtungsanzeige nach Anspruch 1, dadurch gekennzeichnet, daß die Ausformung (7) aus der LED-Zeilenabdeckung als prismatischer Dachstumpf ausgebildet ist.

**Claims**

1. Exposure display in a photographic camera where the exposure values over the entire range are displayed as an LED line with varying line structure in the viewfinder, characterised by the following features:

a) The LED's (2) are arranged in the field of view of the camera user adjacent to the numbers symbolising the exposure values;

b) above the LED's (2) a plane transparent cover (5) has been arranged which includes a deformation (7) on a section of its surface, such that the LED's arranged below the deformation illuminate areas of varying structure on the cover as compared to the LED's arranged below the plane section (6) of the cover;

c) the deformation (7) is situated above those LED's which light up during the introduction of an exposure value whose length does no longer permit the taking of a satisfactory picture by hand, without support.

2. Exposure display according to claim 1, characterised in that the deformation (7) in the LED line cover is lense-shaped.

3. Exposure display according to claim 1, characterised in that the deformation (7) in the LED line cover is shaped as a ridge prism.

4. Exposure display according to claim 1, characterised in that the deformation (7) in the LED line cover is shaped as a truncated ridge prism.

**Revendications**

1. Signalisation d'exposition dans un appareil photographique où l'indication des valuers de l'exposition, sur l'ensemble desdites valuers, est obtenue dans le viseur sous forme de lignes de diodes électroluminescentes (2), lesdites lignes ayant des structures différentes, caractérisée par les particularités suivantes:

a) les diodes luminescentes (2) sont placées dans le champ de vision de l'opérateur à côté des nombres symbolisant les temps de pose;

b) au-dessus des diodes luminescentes (2) est disposée une chape transparente plane (5) qui présente sur une partie de sa surface un renflement (7) de forme telle que les diodes placées sous ledit renflement illuminent des zones de structure différente sur la chape en comparaison avec les diodes se trouvant sous la partie plane (6) de la chape;

c) le renflement (7) se trouve au-dessus de celles des diodes luminescentes (2) qui s'allument à l'instauration d'un temps de pose dont la durée ne permet plus de prises de vues correctes en tenant l'appareil à la main.

2. Signalisation d'exposition selon la revendication 1, caractérisée en ce que le renflement (7) a la forme d'une lentille saillant sur la chape couvrant les lignes de diodes.

3. Signalisation d'exposition selon la revendication 1, caractérisée en que le renflement (7) a la forme d'un toit en dièdre saillant sur la chape couvrant les lignes de diodes.

4. Signalisation d'exposition selon la revendication 1, caractérisée en ce que le renflement (7) a la forme d'un toit en dièdre tronqué saillant sur la chape couvrant les lignes de diodes.

Fig. 1a

Fig. 1b

Fig. 1c

Fig. 2